(19) Europäisches Patentamt
European Patent Office
Office européen des brevets

(11) **EP 2 464 034 B1**

(12) **EUROPEAN PATENT SPECIFICATION**

(45) Date of publication and mention
of the grant of the patent:
**01.10.2014 Bulletin 2014/40**

(51) Int Cl.:
*G01M 11/00* *(2006.01)*　　*H04B 10/071* *(2013.01)*
*G01D 5/36* *(2006.01)*

(21) Application number: **10306358.2**

(22) Date of filing: **06.12.2010**

(54) **Method for reflectometric measurements, measuring device, optical transmit and receive unit, and network element**

Verfahren für reflektometrische Messungen, Messvorrichtung, optische Sende- und Empfangseinheit und Netzwerkelement

Procédé de mesures réflectométriques, dispositif de mesure, unité d'émission et de réception optique et élément de réseau

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**13.06.2012 Bulletin 2012/24**

(73) Proprietor: **ALCATEL LUCENT**
**92100 Boulogne-Billancourt (FR)**

(72) Inventors:
• **Pfeiffer, Thomas**
**70569, Stuttgart (DE)**
• **Straub, Michael**
**75433, Maulbronn (DE)**
• **Hehmann, Jörg**
**71263, Weil der Stadt (DE)**
• **Schmuck, Harald**
**71701, Schwieberdingen (DE)**

(74) Representative: **Mildner, Volker et al**
**Alcatel-Lucent Deutschland AG**
**Intellectual Property & Standards**
**Lorenzstrasse 10**
**70435 Stuttgart (DE)**

(56) References cited:
**EP-A2- 0 453 816　　US-A- 5 754 284**

**Description**

The invention relates to a method for taking into account deficiencies of a measuring device on carrying out a reflectometric measurement at an optical data line, to a measuring device for carrying out reflectometric measurements at an optical data line, to an optical transmit and receive unit for an optical data line, and to a network element for a telecommunication's network.

All measuring devices have whatever non-ideal characteristics. Measuring devices for carrying out reflectometric measurements at an optical data line for example suffer inter alia from internal crosstalk and non-linear system frequency response. When such measuring devices are part of the line equipment of individual optical data lines, they are mass products and the mentioned non-ideal characteristics can be cured only, if at all, by using pre-equipped elements and carrying out preestablished routines. Services of professionals are undesirable.

It is therefore the object of the invention to provide a method for taking into account such deficiencies, as well as to provide the necessary equipment.

This object is achieved by a method for taking into account deficiencies of a measuring device on carrying out a reflectometric measurement at an optical data line, wherein the measurement at an optical data line is complemented by at least one measurement within the measuring device that does not incorporate effects from the optical data line.

This object further is achieved by a measuring device for carrying out reflectometric measurements at an optical data line, wherein the measuring device is built such that complementary measurements are possible that do not incorporate effects from the optical data line.

This object further is achieved by an optical transmit and receive unit for an optical data line, wherein the unit includes a measuring device for carrying out reflectometric measurements at an optical data line, wherein the measuring device is built such that complementary measurements are possible that do not incorporate effects from the optical data line.

This object further is achieved by a network element for a telecommunication's network, wherein the network element includes an optical transmit and receive unit for an optical data line, wherein the unit includes a measuring device for carrying out reflectometric measurements at an optical data line, wherein the measuring device is built such that complementary measurements are possible that do not incorporate effects from the optical data line.

The basic idea behind is to complement the measurements at an optical data line with measurements made within the measuring device itself.

Further embodiments of the invention are to be found in the subclaims and in the following description.

The document US5,754,284 discloses a device for optical time domain reflectometry measurement, in which an optical receiver and a subsequent processor analyse signals, which are obtained by providing a measurement signal to a reference reflector and also to a front panel connector, to which an optical fibre may be connected.

The document EP045381682 discloses a device, in which different measurements are carried out for comparing back-scattered light, which is back-scattered in one case from a reference fibre and back-scattered in another case from a fibre under test.

In the following the invention will be described with reference to the accompanying drawings, in which:

Figure 1    shows a measuring device for carrying out reflectometric measurements at an optical data line.

Figure 2    shows the measuring device of figure 1 highlighting some of the effects of the non-ideal characteristics.

Figure 3    shows measures taken to overcome such effects of the non-ideal characteristics.

Figure 4    shows one specific example of such measures as described with respect to figure 3.

Figure 5    shows a further specific example of such measures as described with respect to figure 3.

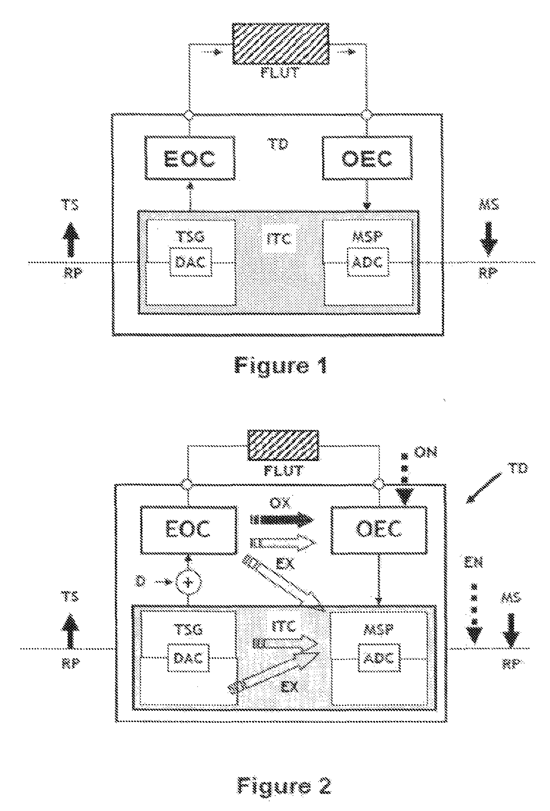

Figure 1 shows a test device TD including an integrated test circuit ITC, an electrical-to-optical converter EOC, and an optical-to-electrical converter OEC, connected to a fiber link under test FLUT.

The integrated test circuit ITC mainly includes a test signal generator TSG, and a measuring signal processor MSP. Both include each a digital part and an analog part, not labeled, and a converter there between, namely a digital-to-analog converter DAC, and an analog-to-digital converter ADC, respectively. Practically the measuring signals as such are analog ones, the generating and processing thereof is being done in a digital way.

The electrical-to-optical converter EOC mainly includes a laser diode plus the corresponding analog circuitry; the optical-to electrical converter OEC mainly includes a photo diode plus the corresponding analog circuitry.

Arrows, like TS for test signal and MS for measuring signal, show, starting from a reference plane RP and going back thereto, the flow of the (wanted) measuring signals.

The fiber link under test FLUT here is shown as linked to the test device TD as if its transmission were to be measured. For use in connection with reflectometric measurements of course actually it is to be linked differently. But that is not specific to this invention and is well known to those who cope with such measurements.

In figure 2 the same device as that from figure 1 is shown illustrating some effects caused by non-ideal characteristics of the test device.

Within the device there are plenty of possibilities for whatever kinds of crosstalk, some of them appearing as optical crosstalk OX or electrical crosstalk EX are depicted. In addition from outside the device, but not from the fiber link under test FLUT, both, optical noise ON, as well as electrical noise EN has negative effects on the measuring of the fiber link under test FLUT.

Apart from illustrating effects caused by non-ideal characteristics of the test device figure 2 also shows means for imprinting data D onto the outgoing data stream. This is a further gateway for spurious signals.

Also not shown are the ports for the communication of the test device with external devices, mainly with a testing apparatus for testing this test device in the course of it being manufactured, and with an OAM center of a telecommunication's operator (OAM = Operation and Maintenance).

Such ports on the one hand are additional gateways for spurious signals, but on the other hand give the opportunity to externally store measuring results. Such externally stored measuring results can be both, prior tests from testing the fiber link under test FLUT to detect long-term degradations, and measurements made prior to its taking into operation, be it in the course of it being manufactured or be it in the course of it being installed.

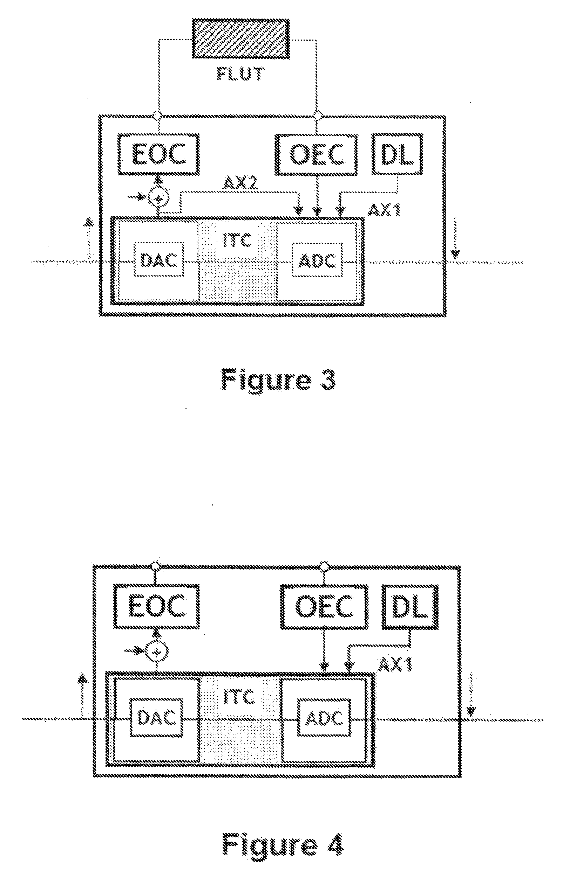

In figure 3 we see additional parts within the test device TD designated to provide additional measures to cope with the non-ideal characteristics of the test device TD.

As such additional parts in this example a dummy load DL, a data path for an auxiliary signal AX1 from the dummy load DL to the measuring signal processor MSP, and a data path for an auxiliary signal AX2 from the test signal generator TSG to the measuring signal processor MSP arc shown.

As shown in figure 4 the dummy load DL allows the measuring signal processor MSP to be cut off from the fiber link under test FLUT, but nevertheless to be terminated correctly via the input for the auxiliary signal AX2. To this end the dummy load DL may be built like a second optical-to-electrical converter, but with an open input. Such dummy load does not only terminate the measuring signal processor MSP correctly, but also is an other sensor for electrical and maybe also for optical crosstalk. But in principle this is the same electrical (and optical) crosstalk that affects the path via the optical-to-electrical converter OEC. Insofar this dummy load DL is a kind of "dummy source" for the purpose of taking into account crosstalk deficiencies of the test device.

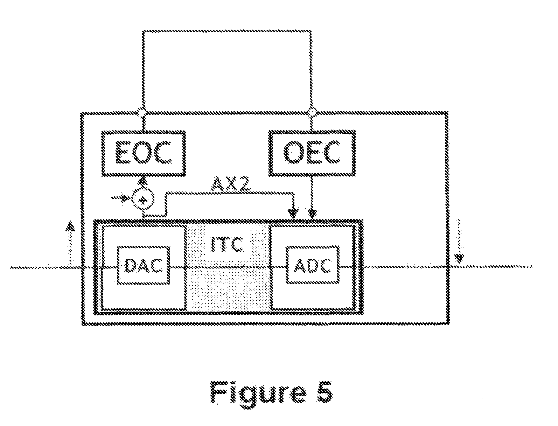

The measuring of the system frequency response can be improved as shown in figure 5 by taking into account both, the measuring results obtained by some kind of internal shortcut via the path for the auxiliary signal AX2 and an external shortcut replacing the optical fiber link. The external shortcut can be used only prior to the taking into operation, whereas the internal shortcut can be used also during normal operation.

In addition to other purposes such measurements also can be used to detect aging and temperature variations of the measuring device.

As an example, the transfer function H (f) of the fiber in reflectometric arrangement can be obtained as

$$H = S\_1 - (S\_2 + S\_3) / (S\_4 * H\_c - (S\_2 + S\_3))$$

where:

- all terms are functions of the frequency,
- S_1 is the actually measured reflectometric response of the fiber,
- S_2 is the actually measured signal using the internal "dummy source" for the auxiliary signal AX1,
- S_3 is a calibration signal being the difference between a prior measured signal with open input and the dummy load DL's signal via the auxiliary input AX1, as described with reference to figure 4,
- S_4 is a signal measured using the internal shortcut via the path for the auxiliary signal AX2, and
- H_c is a transfer function measured in the configuration as described with reference to figure 5 building the ratio between signals reached in measuring via the external and the internal shortcut.

The test signals TS generated by the test signal generator TSG should always be the same.

Thus the invention provides valuable measures for improving operation and maintenance of optical data lines.

**Claims**

1. Method for taking into account deficiencies of a measuring device when carrying out a reflectometric measurement on an optical data line, using a test signal generator and a measuring signal processor wherein the measurement on an optical data line is complemented by at least one measurement within the measuring device that does not incorporate effects from the optical data line,
and wherein said at least one measurement within the measuring device is taken on auxiliary elements within the measuring device,
**characterized in that** said auxiliary element is an optical to electrical converter with an open input providing a first auxiliary signal to said measuring signal processor,
and **in that** said method is carried out using also a second auxiliary signal provided by said test signal generator via a short-cut to said measuring signal processor.

2. Method according to claim 1, **characterized in, that** on at least one measurement within the measuring device results are taken into account that have been taken before connecting to an optical data line.

3. Method according to claim 2, **characterized in, that** on at least one measurement within the measuring device, measurements are taken at auxiliary elements, which effects are comparable with effects of elements that are involved in measurements on an optical data line.

4. Method according to claim 1, **characterized in, that** at least one measurement within the measuring device a signal path is used that bypasses the optical data line to be measured.

5. Measuring device for carrying out reflectometric measurements on an optical data line, wherein the measuring device is built such that complementary measurements are possible that do not incorporate effects from the optical data line,
and wherein said measuring device comprises a test signal generator and a measuring signal processor, and where at least one measurement within the measuring device is taken on auxiliary elements within said measuring device,
**characterized in that** said auxiliary element is an optical to electrical converter with an open input adapted to provide a first auxiliary signal to said measuring signal processor,
and **in that** said measuring device is adapted to carry out said measurement using also a second auxiliary signal provided by said test signal generator via a short-cut to said measuring signal processor.

6. Optical transmit and receive unit for an optical data line, **wherein** the unit includes a measuring device according to claim 5.

7. Network element for a telecommunication network, **wherein** the network element includes an optical transmit and receive unit according to claim 6.

**Patentansprüche**

1. Verfahren zur Berücksichtigung von Mängeln einer Messvorrichtung bei der Durchführung einer reflektometrischen Messung auf einer optischen Datenleitung unter Verwendung eines Testsignalgenerators und eines Messsignalprozessors, wobei die Messung auf einer optischen Datenleitung durch mindestens eine Messung innerhalb der Messvorrichtung, welche keine Einwirkungen aus der optischen Datenleitung enthält, ergänzt wird,
und wobei die besagte mindestens eine Messung innerhalb der Messvorrichtung auf Hilfselementen innerhalb der Messvorrichtung durchgeführt wird,
**dadurch gekennzeichnet, dass** das Hilfselement ein opto-elektrischer Wandler mit einem offenen Eingang, welcher ein erstes Hilfssignal an den besagten Messsignalprozessor bereitstellt, ist,
und dass das besagte Verfahren ebenfalls unter Verwendung eines von dem besagten Testsignalgenerator über einen Shortcut an den besagten Messsignalprozessor bereitgestellten zweiten Hilfssignals durchgeführt wird.

2. Verfahren nach Anspruch 1, **dadurch gekennzeichnet, dass** bei mindestens einer Messung innerhalb der Messvorrichtung Ergebnisse, die vor dem Anschluss an eine optische Datenleitung aufgenommen wurden, berücksichtigt werden.

3. Vorrichtung nach Anschluss 2, **dadurch gekennzeichnet, dass** bei mindestens einer Messung innerhalb der Messvorrichtung Messungen an Hilfselementen vorgenommen werden, deren Einwirkungen mit Einwirkungen von Elementen, die an Messungen auf einer optischen Datenleitung beteiligt sind, vergleichbar sind.

4. Verfahren nach Anspruch 1, **dadurch gekennzeichnet, dass** für mindestens eine Messung innerhalb der Messvorrichtung ein Signalpfad verwendet wird, welcher die zu messende optische Datenleitung umgeht.

5. Messvorrichtung zur Durchführung von reflektometrischen Messungen auf einer optischen Datenleitung, wobei die Messvorrichtung derart gebaut ist, dass ergänzende Messungen möglich sind, die keine Einwirkungen von der optischen Datenleitung enthalten,
und wobei die besagte Messvorrichtung einen Testsignalgenerator und einen Messsignalprozessor umfasst,
und wobei mindestens eine Messung innerhalb der Messvorrichtung auf Hilfselementen innerhalb der besagten Messvorrichtung vorgenommen wird,
**dadurch gekennzeichnet, dass** das besagte Hilfselement ein opto-elektrischer Wandler mit einem offenen Eingang, welcher dazu ausgelegt ist, ein erstes Hilfssignal an den besagten Messsignalprozessor bereitzustellen, ist,
und dass die besagte Messvorrichtung dazu ausgelegt ist, die besagte Messung ebenfalls unter Verwendung eines von dem besagten Testsignalgenerator über einen Shortcut an den besagten Messsignalprozessor bereitgestellten zweiten Hilfssignals durchgeführt wird.

6. Optische Sende- und Empfangseinheit für eine optische Datenleitung, wobei die Einheit eine Messvorrichtung gemäß Anspruch 5 umfasst.

7. Netzwerkelement für ein Telekommunikationsnetzwerk, wobei das Netzwerkelement eine optische Sende- und Empfangseinheit gemäß Anspruch 6 umfasst.

## Revendications

1. Procédé de prise en compte d'insuffisances d'un dispositif de mesure lors de la réalisation d'une mesure par réflectométrie sur une ligne de données optique, en utilisant un générateur de signaux de test et un processeur de signaux de mesure dans lequel la mesure sur une ligne de données optique est complétée par au moins une mesure dans le dispositif de mesure qui n'intègre pas d'effets de la ligne de données optique,
et dans lequel ladite au moins une mesure dans le dispositif de mesure est prise sur des éléments auxiliaires dans le dispositif de mesure,
**caractérisé en ce que** ledit élément auxiliaire est un convertisseur optique-électrique avec une entrée ouverte fournissant un premier signal auxiliaire audit processeur de signaux de mesure,
et **en ce que** ledit procédé est exécuté en utilisant également un deuxième signal auxiliaire fourni par ledit générateur de signaux de test par l'intermédiaire d'un raccourci vers ledit processeur de signaux de mesure.

2. Procédé selon la revendication 1, **caractérisé en ce que**, sur au moins une mesure dans le dispositif de mesure, des résultats, qui ont été pris avant la connexion à une ligne de données optique, sont pris en compte.

3. Procédé selon la revendication 2, **caractérisé en ce que**, sur au moins une mesure dans le dispositif de mesure, des mesures, dont les effets sont comparables aux effets d'éléments qui sont impliqués dans des mesures sur une ligne de données optique, sont prises au niveau d'éléments auxiliaires.

4. Procédé selon la revendication 1, **caractérisé en ce que**, sur au moins une mesure dans le dispositif de mesure, un trajet de signal, qui évite la ligne de données optique à mesurer, est utilisé.

5. Dispositif de mesure pour effectuer des mesures par réflectométrie sur une ligne de données optique, le dispositif de mesure étant construit de sorte que des mesures complémentaires, qui n'intègrent pas d'effets de la ligne de données optique, soient possibles,
et dans lequel ledit dispositif de mesure comprend un générateur de signaux de test et un processeur de signaux de mesure,
et où au moins une mesure dans le dispositif de mesure est prise sur des éléments auxiliaires dans ledit dispositif de mesure,
**caractérisé en ce que** ledit élément auxiliaire est un convertisseur optique-électrique avec une entrée ouverte adaptée pour fournir un premier signal auxiliaire audit processeur de signaux de mesure,
et **en ce que** ledit dispositif de mesure est adapté pour effectuer ladite mesure en utilisant également un deuxième signal auxiliaire fourni par ledit générateur de signaux de test par l'intermédiaire d'un raccourci vers ledit processeur de signaux de mesure.

6. Unité d'émission et de réception optique pour une ligne de données optique, dans lequel l'unité comprend un dispositif de mesure selon la revendication 5.

7. Élément de réseau pour un réseau de télécommunication, dans lequel l'élément de réseau comprend une unité d'émission et de réception optique selon la revendication 6.

Figure 1

Figure 2

Figure 3

Figure 4

Figure 5

**EP 2 464 034 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5754284 A
- EP 045381682 A